# FASCICULE DE BREVET EUROPEEN

(11) **EP 0 915 808 B1**
(45) Date de publication et mention de la délivrance du brevet: **07.11.2001**
(21) Numéro de dépôt: 97933709.4
(22) Date de dépôt: 11.07.1997
(51) Int. Cl.: C01B 39/02, C01B 39/04, B01J 19/20, B01J 19/18, C01B 39/24, C01B 39/48, C01B 39/34

(54) **PROCEDE DE SYNTHESE DE ZEOLITHE AVEC AGITATION HOMOGENE DU MILIEU, DISPOSITIF ET APPLICATION**
VERFAHREN ZUR SYNTHESE VON ZEOLITHEN MIT HOMOGENEM ENTFORMEN DES MEDIUMS, VORRICHTUNG UND ANWENDUNG
METHOD OF ZEOLITE SYNTHESIS WITH HOMOGENEOUS SHAKING OUT OF THE MEDIUM, DEVICE AND APPLICATION

(30) Priorité: 12.07.1996 FR 9608780
(43) Date de publication de la demande: 19.05.1999
(73) Titulaire: ELF AQUITAINE, 92400 Courbevoie (FR)
(72) Inventeur: ANGLEROT, Didier, F-64140 Billière (FR); BOUSQUET, Jacques, F-69540 Irigny (FR); Di RENZO, Francesco, F-34000 Montpellier (FR); KLEIN, Jean-Paul, F-69360 Communay (FR); SCHULZ, Philippe, F-69110 Sainte Foix lès Lyon (FR); BEBON, Christine, F-69120 Vaulx en Velin (FR); COLSON, Didier, F-69330 Pusignan (FR)
(74) Mandataire: Jolly, Jean-Pierre
(86) Numéro de dépôt international: FR9701276
(87) Numéro de publication internationale: WO9802384

(56) Documents cités:
- EP-A- 0 364 352
- EP-A- 0 419 307
- WO-A-87/00158
- FR-A- 1 581 919
- GB-A- 1 404 163
- GB-A- 2 175 890
- US-A- 4 091 007
- DATABASE WPI Week 8516 Derwent Publications Ltd., London, GB; AN 85-097623 XP002028540 & SU 1 115 791 A (I. A. VOLKOV) , 30 septembre 1984 cité dans la demande & SU 1 115 791 A

## Description

La présente invention a pour objet un procédé de synthèse de zéolithe et son dispositif de mise en oeuvre. La présente invention concerne plus particulièrement la synthèse de zéolithes de toutes natures en milieu agité en vue d'améliorer le mode de formation des cristaux de zéolithes et leur qualité.

Pour obtenir des zéolithes, il est usuel de former des solutions ou des gels dits de cristallisation contenant une source d'aluminium trivalent, une source de silicium tétravalent, au moins un cation alcalin ou alcalino-terreux sous forme d'hydroxyde, de l'eau et éventuellement un agent structurant organique. Cependant, à partir de ces constituants, il est possible d'obtenir des zéolithes bien différentes telles que l'offretite (OFF), la mazzite (MAZ) ou la zéolithe L (LTL) (S. Ernst et J. Weitkamp; Catalysis Today 19, 1994, 27-60) en faisant varier leur répartition ou le traitement hydrothermal ultérieur nécessaire à la cristallisation, ou encore l'agitation du milieu.

D'autres synthèses sont obtenues à partir de gels dans lesquels on introduit, en remplacement des sources d'aluminium amorphes, des aluminosilicates cristallins naturels ou synthétiques ou même des cristaux de zéolithes. De telles substitutions ont permis d'obtenir une croissance homogène des cristaux de zéolithes cibles, que ce soit en milieu non agité ou en milieu agité du fait de la dissolution lente et régulière de ces aluminosilicates ou de ces cristaux de zéolithe source dans le milieu de synthèse. On a pu ainsi synthétiser des zéolithes de type Mazzite (Dwyer, US 4.091.007; Fajula, US 4.891.200, Cannan, US 4.840.779, et Di Renzo, FR 2.651.221).

L'art antérieur est riche en exemples montrant que de faibles variations de la composition du gel de synthèse ou des conditions de cristallisation peuvent entraîner la synthèse de zéolithes de nature très différentes ou même des composés amorphes. Un autre facteur influençant la croissance des cristaux est l'agitation(ou la non agitation) du milieu de synthèse indépendamment de la composition de la solution ou du gel de cristallisation. Ainsi, pour l'obtention d'un grand nombre de zéolithes, l'homme de l'art déconseille vivement l'emploi d'agitateurs au cours de la cristallisation de la zéolithe, aussi bien au cours de l'étape de mûrissement qu'au cours de l'étape de nucléation des cristaux. On a constaté que, selon la composition de la solution ou du gel de cristallisation, on peut voir apparaître, soit un mélange de faujasite et de gmélinite en milieu statique, soit de la zéolithe P en milieu agité au moyen d'un agitateur à ancre (D.E.W. Vaughan, Chem. Engin. Progress, 84(2), 1988, pp 25-31). En effet, le fort taux de cisaillement généré par l'agitateur, localisé dans seulement une partie du milieu de synthèse, modifie considérablement le processus de germination et de croissance des cristaux de zéolithes et leur nature même si la composition initiale du gel est la même. Parallèlement pour des zéolithes se préparant usuellement en milieu agité, comme par exemple la faujasite, on a observé une baisse de la cristallinité de la faujasite obtenue lorsqu'on augmente la vitesse de l'agitateur et donc le cisaillement local(R.M.Barrer, Hydrothermal Chemistry of Zeolites, Academic Press., 1982, p.171)

C'est pour les raisons mentionnées ci-dessus que de nombreuses synthèses de zéolithes sont réalisées en statique, c'est-à-dire sans agitation, car cela favorise la croissance lente des cristaux, ainsi que l'apparition et la stabilisation de phases zéolithiques, thermodynamiquement peu stables. En outre, beaucoup de zéolithes naturelles n'ont pas encore pu être reproduites synthétiquement à l'état pur, ou comme sous-produits de synthèse d'autres zéolithes, que ce soit en milieu agité ou en milieu statique.

En outre, il est bien connu des fabricants de zéolithes que la transposition de certaines synthèses à l'échelle industrielle est difficile voire impossible. Elle conduit souvent à des rendements en zéolithes faibles et des taux de cristallinité beaucoup plus faibles que ceux généralement obtenus au niveau du laboratoire (D.W.Breck, Zeolites Molecular Sieves, John Wiley and sons, 1974, p.725-731).

Pour les raisons ci-dessus, il est impossible de synthétiser des zéolithes par des procédés conjuguant deux types d'agitation dont une agitation à ancre et une agitation au moyen d'un propulseur placé dans un cylindre en perpétuel mouvement comme il a été proposé dans le brevet SU 1.115.791, ces agitations induisant de fortes variations de cisaillement au niveau de l'ancre et des bords du cylindre en mouvement, non favorables au mûrissement et à la stabilisation des phases cristallines.

La présente invention vise donc un procédé de synthèse de zéolithe permettant de stabiliser plus facilement certaines phases zéolithiques très instables, même en opérant en statique, d'améliorer les rendements quantitatifs de synthèse par rapport à ceux obtenus en milieu statique ou agité classique tout en diminuant le temps de synthèse grâce à un meilleur contrôle des transferts de matière et de chaleur dans le gel ou solution de synthèse, et ainsi augmenter fortement le taux de cristallinité des zéolithes. En outre, le procédé visé est transposable facilement à l'échelle industrielle.

La présente invention a donc pour objet un procédé de synthèse de zéolithe à partir d'un milieu de synthèse contenant notamment une source d'aluminium trivalent, une source de silicium tétravalent, au moins un cation alcalin ou alcalino-terreux sous forme d'hydroxyde et de l'eau, effectué dans un réacteur contenant un mobile hélicoïdal plein dans un tube de guidage définissant un espace intérieur et un espace extérieur audit tube, caractérisé en ce qu'on fait circuler ledit milieu de synthèse dans le réacteur en un écoulement continu parcourant l'espace intérieur puis l'espace extérieur au dit tube et retournant à l'espace intérieur, par la seule rotation du mobile hélicoïdal plein, à une vitesse inférieure à 500t/mn, dans le dit tube maintenu fixe, le milieu de synthèse étant maintenu à une température de mise en oeuvre d'au moins une des opérations de mûrissement ou de croissance cristalline de la zéolithe à synthétiser.

La circulation du dit milieu de synthèse est assurée par la mise en rotation continue ou discontinue du mobile hélicoïdal plein. Il est évident qu'on peut également faire circuler le milieu au moyen de plusieurs mobiles hélicoïdaux pleins chacun étant mis en rotation dans un tube de guidage maintenu fixe dans le réacteur.

Les caractéristiques dimensionnelles et la vitesse de rotation du mobile plein sont adaptées au milieu de synthèse, notamment à sa viscosité, pour établir dans le réacteur un régime d'écoulement non turbulent, c'est-à-dire un régime d'écoulement laminaire ou intermédiaire, correspondant à un nombre de Reynolds d'agitation inférieur à 25 000 (voir le recueil intitulé Mixing de Nagata, Wiley, 1975). La vitesse de rotation du mobile hélicoïdal de 500 tours/mn correspond au taux de cisaillement maximum toléré pour obtenir un régime d'écoulement laminaire ou intermédiaire dans les gels de synthèse des zéolithes.

Au cours des synthèses en milieu statique de zéolithes, les germes apparaissent de façon aléatoire dans le milieu de synthèse c'est-à-dire à des endroits imprévisibles et à des moments différents ce qui conduit à des distributions de taille de cristaux larges et peu reproductibles et à la présence de plusieurs phases cristallines ou amorphes intermédiaires. En milieu agité traditionnel, le milieu présente un taux de cisaillement variable et souvent élevé au niveau de l'agitation et quasiment nul comparativement hors de la zone de l'agitateur ce qui empêche une germination homogène. Avec la présente invention, le milieu est rendu homogène par l'agitation contrôlée du milieu, c'est-à-dire une mise en mouvement de l'ensemble du milieu dans le ou les tubes de guidage et à l'extérieur de ceux-ci. Cet écoulement homogène a pour conséquence l'obtention de taux de cisaillement, de températures et de compositions quasiment identiques en tous points se traduisant par une égalité de chance d'obtenir au même moment, un processus de germination identique ce qui ne peut être obtenu par les procédés classiques d'agitation ou même en milieu statique.

Aussi, outre l'utilisation d'un mobile hélicoïdal plein, pour faire circuler le milieu de synthèse sans perturber le régime d'écoulement, donc sans faire varier notablement son taux de cisaillement, le tube de guidage comprend au moins un orifice en sa partie inférieure dont la forme n'influence que peu sensiblement le cisaillement du gel. Par orifice, on entend ici, l'espace entre l'extrémité inférieure du tube de guidage et le fond du réacteur ou une pluralité de trous découpés dans l'extrémité inférieure du tube de guidage s'appuyant dans le fond du réacteur. Il est aisé à l'homme du métier de donner à ces trous toutes formes désirées, leurs bords ne devant pas favoriser la nucléation de germes indésirables de zéolithes, c'est-à-dire une nucléation hétérogène.

Dans le cadre de la présente invention, l'axe d'au moins un mobile hélicoïdale se confond avec l'axe du réacteur et celui du tube de guidage qui le contient.

Dans un mode préféré de l'invention, le mobile hélicoïdal s'inscrit dans un cylindre de révolution tel que le rapport du diamètre de ce dit cylindre de révolution sur le diamètre du tube de guidage qui le contient varie de 0,4 à 0,99, et tel que le rapport du diamètre de ce cylindre de révolution sur le diamètre du réacteur varie de 0,3 à 0,9.

De plus, dans le réacteur, la hauteur des tubes de guidage est choisie inférieure à celle du réacteur, mais de préférence telle que le rapport de la hauteur du dit tube de guidage sur la hauteur de remplissage du réacteur par le gel ou la solution de synthèse soit inférieur ou égal à 0,95.

Pour réaliser le procédé selon l'invention, on va choisir le mobile hélicoïdal plein nécessaire à la circulation du milieu de synthèse dans le réacteur dans le groupe constitué par une vis d'Archimède, les rubans torsadés, ou tout autre mobile plein ayant à sa périphérie au moins une arête extérieure présentant une forme hélicoïdale sur l'ensemble de sa longueur, susceptible d'établir un écoulement à régime non turbulent , par mise en rotation. Le mobile préféré de l'invention, est une vis d'Archimède animée d'un mouvement rotatif au moyen d'un moteur.

L'utilisation d'une vis d'Archimède pour laquelle il n'y a aucune limite de pas permet non seulement d'assurer un flux homogène dans le réacteur à cisaillement quasiment constant mais aussi une transposition immédiate du procédé de l'invention à toute échelle et principalement à l'échelle industrielle.

Pour mettre en oeuvre le procédé de l'invention, le rapport des vitesses des écoulements de directions opposées à l'intérieur et à l'extérieur de chaque tube de guidage varie entre 0,5 et 2

Dans un mode particulier de réalisation de l'invention, le milieu de synthèse traverse une succession de réacteurs disposés en série ou en parallèles, raccordés entre eux, le gel recirculant dans chaque réacteur avant d'être dirigé vers le réacteur suivant. Avec ce mode particulier, on peut séparer les étapes de nucléation et de croissance ou de mûrissement du gel, et sa cristallisation.

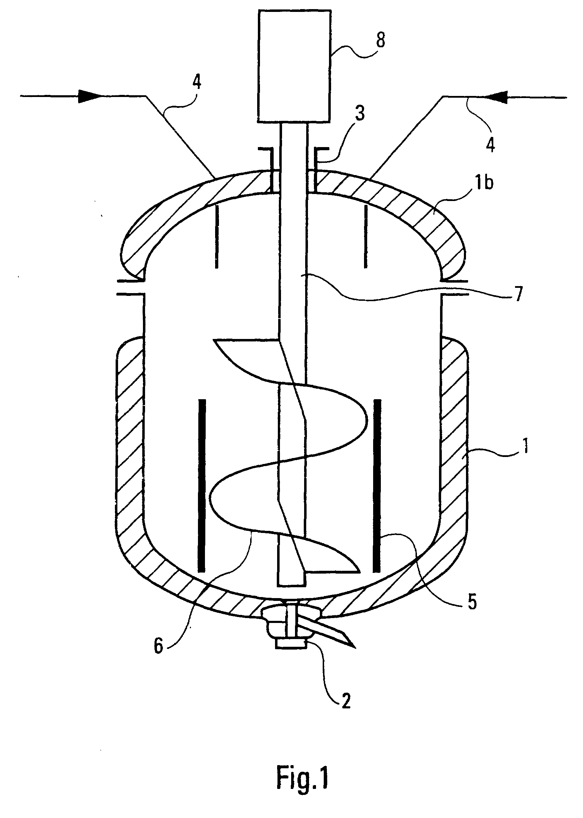

La présente invention a également pour objet un dispositif de mise en oeuvre du procédé de l'invention représenté dans la figure 1 qui se caractérise en ce qu'il est constitué par au moins un réacteur (1) ouvert ou fermé contenant un tube de guidage cylindrique (5), fixe par rapport au réacteur, d'axe parallèle aux parois du réacteur, comportant au moins un orifice dans sa partie inférieure, ce tube de guidage contenant un mobile hélicoïdal plein (6) s'inscrivant dans un cylindre de révolution de diamètre variant de 0,3 à 0,9 fois le diamètre du réacteur et de 0,4 à 0,99 fois le diamètre du tube de guidage, ce dit mobile étant mis en rotation par un moteur (8), externe au réacteur, le dit réacteur comprenant des conduites d'injection (4) des composés entrant dans la constitution du gel et éventuellement un dispositif de vidange (2).

Dans une forme préférée de l'invention, le tube de guidage contenant le mobile hélicoïdal est disposé dans l'axe du réacteur. On ne sortirait pas du cadre de l'invention, si on fixait plusieurs tubes de guidages parallèles contenant chacun un mobile hélicoïdal plein, dont l'un peut être placé dans l'axe du réacteur.

Dans un réacteur du dispositif de l'invention, le tube de guidage n'occupe pas toute la hauteur du réacteur ; cependant, le rapport de la hauteur du tube de guidage sur la hauteur de remplissage du réacteur est maintenu de préférence inférieur à 0.95.

Parmi les mobiles plein applicables à la présente invention, on trouve les mobiles du groupe constitué par la vis d'Archimède, les rubans hélicoïdaux et tout mobile plein ayant à sa périphérie au moins une arête extérieure présentant une forme hélicoïdale sur l'ensemble de sa longueur. Le mobile préféré est une vis d'Archimède qui est mise en rotation au moyen d'un moteur disposé sur son axe, sa vitesse de rotation étant de préférence inférieure à 500 tours par minute. Tous les pas de vis sont admis pour les vis d'Archimède dans le cadre de l'invention.

Le dispositif de l'invention peut être constitué par un seul réacteur de type autoclave ouvert ou fermé comprenant au moins un tube de guidage contenant un mobile hélicoïdal et pouvant fonctionner sous pression ou à l'atmosphère.

Dans une autre forme de réalisation du dispositif, ce dernier peut être constitué par une pluralité de réacteurs disposés en série contenant chacun un seul tube de guidage équipé d'une vis d'Archimède reliée à un moteur, et comprenant éventuellement à sa base un dispositif d'obturation/vidange du réacteur. Les vis d'Archimède peuvent être toutes identiques ou différentes, tourner à la même vitesse ou non, et peuvent être raccordées ou non au même moteur.

Ces dispositifs selon l'invention facilitent l'extrapolation industrielle, mais ils permettent aussi de pouvoir travailler à des températures de cristallisation plus faibles autorisant la synthèse de zéolithes sous pression atmosphérique au contraire de l'art antérieur connu.

La présente invention concerne également l'application du procédé et du dispositif selon l'invention à la synthèse en milieu agité à cisaillement constant de zéolithes telles que l'EMO, l'EMT, la Gmélinite et la Mazzite.

La compréhension du procédé et du dispositif de l'invention apparaîtra plus clairement au regard des figures décrites ci-après.

La figure 1 représente en coupe un dispositif pour la synthèse de zéolithe en discontinu.

La figure 2 présente en coupe un deuxième dispositif de synthèse en discontinu.

La figure 3 présente la coupe d'un dispositif de synthèse en continu de zéolithe.

Dans la figure 1, le réacteur (1) est représenté sous la forme d'un autoclave pouvant fonctionner à pression atmosphérique ou sous pression, comprenant un corps cylindrique (1a) équipé d'un dispositif de vidange (2) et un couvercle (1b). Ce couvercle (1b) est percé d'un orifice (3) et de conduites d'arrivée (4) des constituants entrant dans la composition des solutions ou gels de synthèse. A l'intérieur du corps du réacteur (1a), un tube de guidage de forme cylindrique (5) est fixé par tous moyens; son axe est confondu avec celui du réacteur (1). Il contient une vis d'Archimède (6) dont l'axe de révolution est confondu avec les deux axes précédents. Le prolongement (7) de la dite vis (6) traverse le couvercle (1b) par l'orifice (3) et est raccordé à un moteur (8) qui peut faire tourner la dite vis (6) sur elle-même.

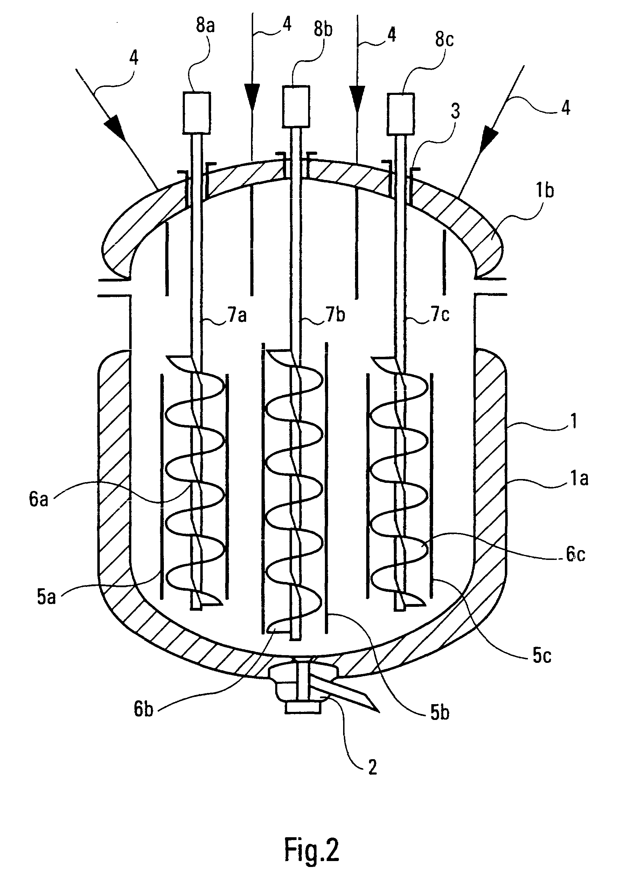

Dans la figure 2, on dispose d'un réacteur (1) comprenant comme dans la figure 1, d'un couvercle (1b) mais cette fois percé de plusieurs orifices (3) (trois sont représentés) et comprenant plusieurs conduites d'arrivée des composants du gel de synthèse, et d'un corps (1a) comprenant un dispositif de vidange (2). Le réacteur contient au moins trois tubes de guidage (5a, 5b et 5c) contenant chacun une vis d'Archimède (6a, 6b et 6c), l'axe de la vis (6b) étant confondu avec ceux du tube de guidage (5b) et du corps de réacteur (1a). Les trois vis (6a, 6b et 6c) sont reliées à trois moteurs (8a, 8b et 8c) par les prolongements (7a, 7b et 7c) traversant les orifices (3) du couvercle (1b).

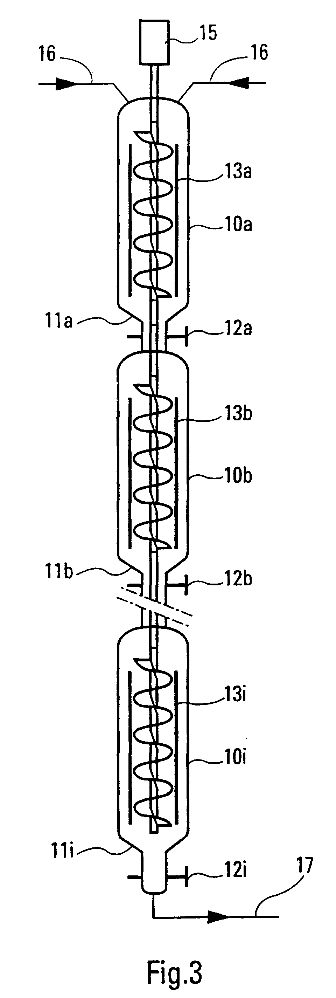

La figure 3 présente une série de réacteurs (10) disposé en série et reliés l'un à l'autre, présentant à la base la forme d'un venturi (11) dont l'orifice est équipé d'un dispositif d'obturation/vidange (12) susceptible d'obturer le dit venturi (11), et disposé en fond de réacteur (10). Chaque réacteur (10) est équipé d'un tube de guidage (13) contenant chacun une vis d'Archimède (14). Toutes ces vis (14) de pas identiques ou différents sont soit reliées entre elles et raccordées à un même moteur (15) situé en tête du premier réacteur (10a), soit reliées à des moteurs différents non représentés sur la figure permettant de mettre ces vis (14) en rotation mais à des vitesses différentes. Le premier réacteur (10a) présente des conduites d'arrivée (16) des composants nécessaires du gel. De telles conduites pourraient également être présentes en tête des autres réacteurs (10b), ....... (10i). En fond de réacteur (10i) une conduite (17) permet de récupérer le gel cristallisé qui est entraîné vers des unités de séparation et de traitement ultérieur des cristaux. La fermeture partielle ou totale des dispositifs d'obturation/vidange (12) permet d'assurer la recirculation partielle ou totale des gels de synthèse dans chaque réacteur (10).

Pour montrer l'efficacité du procédé et du dispositif selon l'invention des exemples sont donnés ci-après à titre non limitatif. Toutes les zéolithes préparées ci-après sont désignées sous leur nom de référence publié dans « Atlas of zeolite Structure Types », third Revised Edition, Butterworth et Heinemann, London, 1992.

### EXEMPLE I

Le présent exemple vise à montrer la supériorité du procédé de l'invention et du dispositif correspondant pour la préparation de l'EMO.

A cet effet, on prépare plusieurs échantillons d'un même gel de synthèse de zéolithe de structure faujasite de rapport Si/Al>3,5 en présence d'éther-couronne "15-Crown-5" ou 15-C-5 d'une part par le procédé classique en milieu statique dans un autoclave et d'autre part en milieu agité soit selon l'invention soit au moyen d'un agitateur classique de type ancre. Les gels ainsi préparés sont de stoechiométrie identique à:
10 SiO₂; Al₂O₃; 2,1 Na₂O; 0,4 15-C-5; 100 H₂O

On opère en introduisant successivement dans un réacteur de 2 l en volume, pour chacun des échantillons à:
t=0, 831,6g d'eau déminéralisée
t=15 mn, 84,4g de 15-C-5
t=45 mn, 77,5g de NaOH
t=75 mn, 170,8g de NaAlO2
t=105 mn, 1406,3g de silice colloïdale Ludox AS 40 commercialisée par DUPONT DE NEMOURS.

La température du réacteur est maintenue à au moins 100°C pendant toute la durée de formation du gel puis encore pendant un certain temps pour la formation des cristaux de EMO.

Le tableau I ci-après présente les caractéristiques de cristallinité des cristaux d'EMO obtenus en fonction de l'agitation du milieu de synthèse de la température du gel et du temps de mûrissement du gel. Dans le cadre du procédé selon l'invention on utilise une vis d'Archimède de pas égal à 81 mm, de diamètre égal à 81 mm, dans un cylindre de 89 mm de diamètre, dans un autoclave de diamètre égal à 150 mm. La vis est mise en rotation à 250 tours/mn.

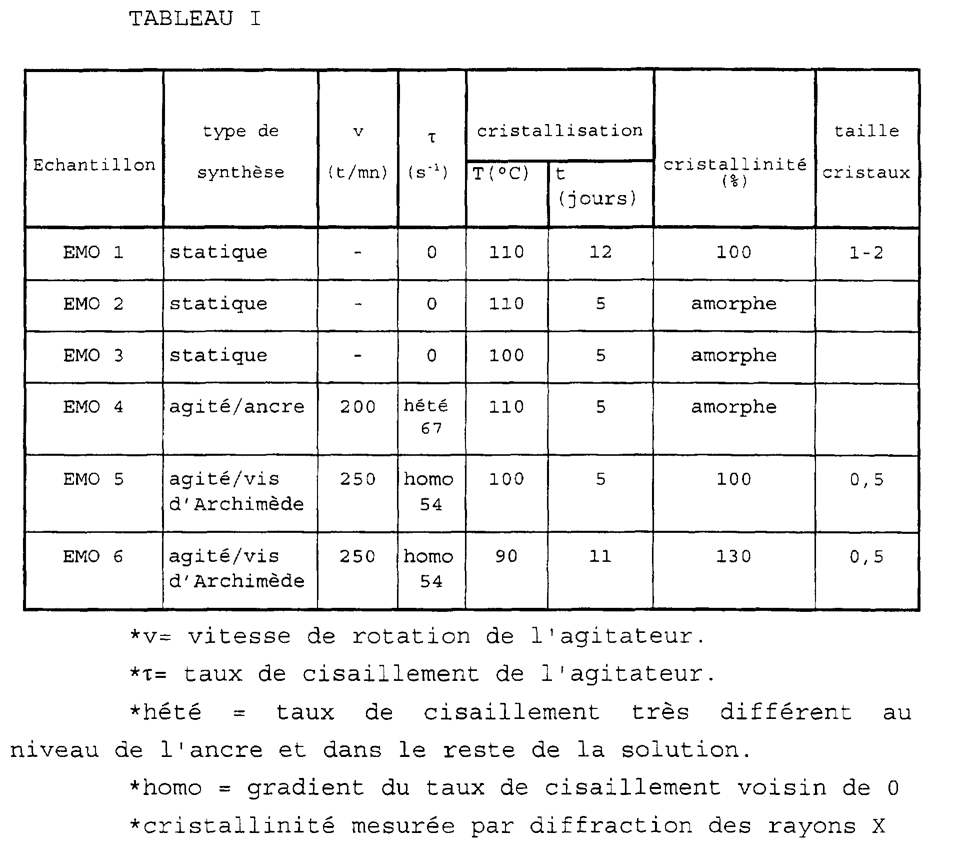

Les trois faujasites (FAU) obtenues, EMO 1, EMO 5 et EMO 6 sont de composition chimique identique

On constate d'après ce tableau qu'en statique il faut une température de cristallisation de 110°C, et un temps de cristallisation de 12 jours pour obtenir de l'EMO dont la taille des cristaux est de 1 à 2 µm (EMO 1), alors qu'il ne faut que 5 jours pour cristalliser selon le procédé de l'invention à 100°C de l'EMO sous forme de cristaux plus petits (0,5 µm - EMO 5). Les autres essais rapportés montrent qu'il est impossible de cristalliser en statique de l'EMO en moins de 12 jours ou à une température de 100°C, même en milieu agité au moyen d'un agitateur type ancre mis en rotation à 200 tours/mn et à fort taux de cisaillement (EMO 2, EMO 3 et EMO 4).

Le présent exemple souligne donc que la synthèse en milieu agité selon l'invention conduit à des durées de cristallisation plus courtes (EMO 5) pour au moins la même qualité de cristaux sinon meilleure de FAU obtenue (taille des cristaux ), ce qui permet d'abaisser la température de cristallisation (EMO 6) et de travailler sous pression atmosphérique.

### EXEMPLE II

Le présent exemple vise à montrer la supériorité du procédé de l'invention et du dispositif correspondant pour la préparation de l'EMT.

A cet effet, on prépare plusieurs échantillons d'un même gel de synthèse de zéolithe de structure faujasite de rapport Si/Al>3,5 en présence d'éther-couronne "18-Crown-6" ou 18-C-6 d'une part par le procédé classique en milieu statique dans un autoclave et d'autre part en milieu agité soit selon l'invention soit au moyen d'un agitateur classique de type ancre. Les gels ainsi préparés sont de stoechiomètrie identique:
10 SiO₂; Al₂O₃; 2,1 Na₂O; 0,4 18-C-6; 100 H₂O

On opère en introduisant successivement dans un réacteur de 2 l en volume, pour chacun des échantillons à:
t=0, 831,6g d'eau déminéralisée
t=15 mn, 84,4g de 18-C-6
t=45 mn, 77,5g de NaOH
t=75 mn, 170,8g de NaAlO2
t=105 mn, 1406,3g de silice colloïdale Ludox AS 40 commercialisé par DUPONT DE NEMOURS.

La température du réacteur est maintenue à au moins 100°C pendant toute la durée de formation du gel puis encore pendant un certain temps pour la formation des cristaux de EMT.

Le tableau II ci-après présente les caractéristiques de cristallinité des cristaux d'EMT obtenus en fonction de l'agitation du milieu de synthèse de la température du gel et du temps de mûrissement du gel. On opère pour les échantillons selon l'invention dans un dispositif identique à celui décrit dans dans l'exemple I dans des conditions identiques de fonctionnement.

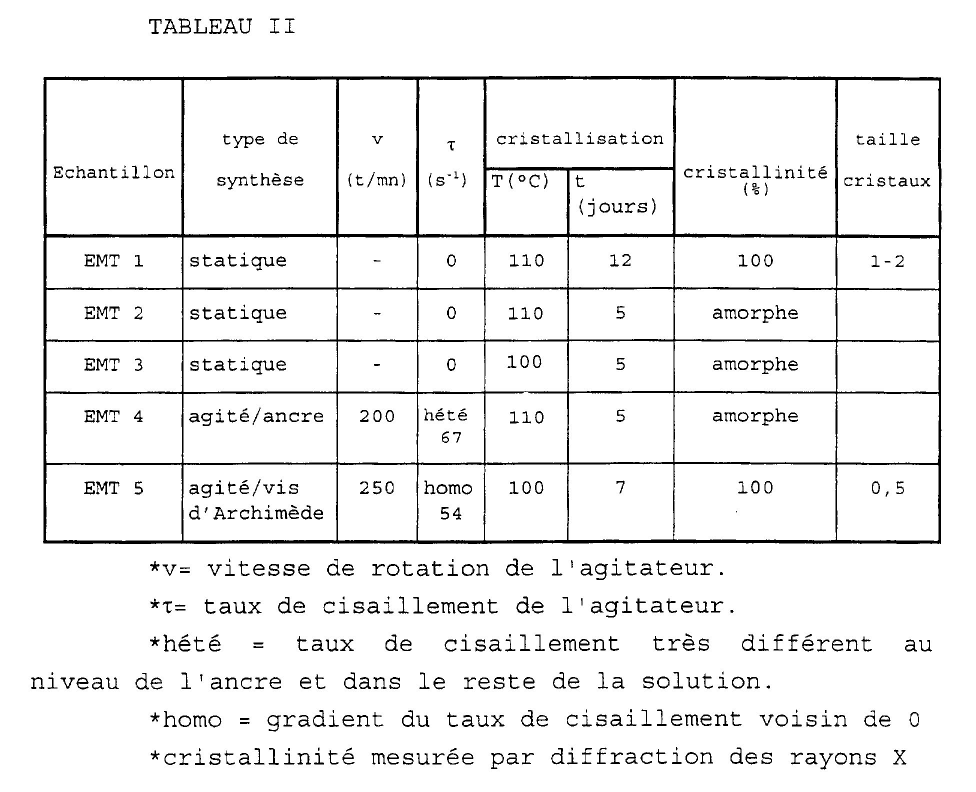

Les deux faujasites (FAU) obtenues, EMT 1 et EMT 5 sont de composition chimique identique

On constate d'après ce tableau que comme pour l'exemple I la cristallisation se fait dans des conditions plus favorables que celles utilisées par l'homme du métier, qu'on obtient une cristallinité de l'EMT au moins identique sinon meilleure, et qu'on peut travailler plus rapidement à des températures moindres, même à pression atmosphérique.

### EXEMPLE III

Le présent exemple vise à montrer la supériorité du procédé de l'invention et du dispositif correspondant pour la préparation de la mazzite.

On prépare plusieurs échantillons d'un même gel de synthèse de stoechiomètrie suivante:
5,3 Na₂0; Al₂O₃; 0,3 TMA₂O; 15 SiO₂; 270 H₂O

Les différents échantillons de gel sont préparés sous agitation, soit mécanique, à environ 150 tours/minute au moyen d'un agitateur type ancre, soit selon le procédé selon l'invention au moyen d'une vis d'Archimède de pas égal à 81mm., de diamètre égal à 81 mm dans un tube de guidage de 89mm de diamètre, tournant à la vitesse de 250 t/mn. Les échantillons sont maintenus à température ambiante tout le temps de l'introduction des composants du gel.

Ainsi, pour chaque échantillon, on introduit dans un réacteur de 2 l en volume, 1902,3 g d'eau permutée dans laquelle on dissout progressivement 150,6 g de soude, puis 26,2 g de tétraméthylammonium TMACl. A cette solution on ajoute progressivement 333,9 g de Zeosil 1165 MP commercialisée par Rhône Poulenc constituant la source de silice de la zéolithe, puis on maintient l'agitation pendant une heure. On ajoute ensuite la source d'aluminium constituée ici de 130,9 g de siliporite NaX commercialisée par CECA, puis on maintient l'agitation pendant deux heures. La température du gel est ensuite montée à 115°C pour les MAZ 1 et MAZ 2, ou à 100°C pour la MAZ 3, puis- maintenue à ces valeurs.

Selon la synthèse classique, le gel est agité par une agitateur à ancre tournant à 150 t/mn, sous pression autogène, jusqu'à cristallisation de la mazzite. Selon le procédé de l'invention, le gel est agité à pression atmosphérique.

Les conditions de synthèse et de cristallisation ainsi que la cristallinité des zéolithes obtenues pour chaque échantillon sont rassemblées dans le tableau III ci-après.

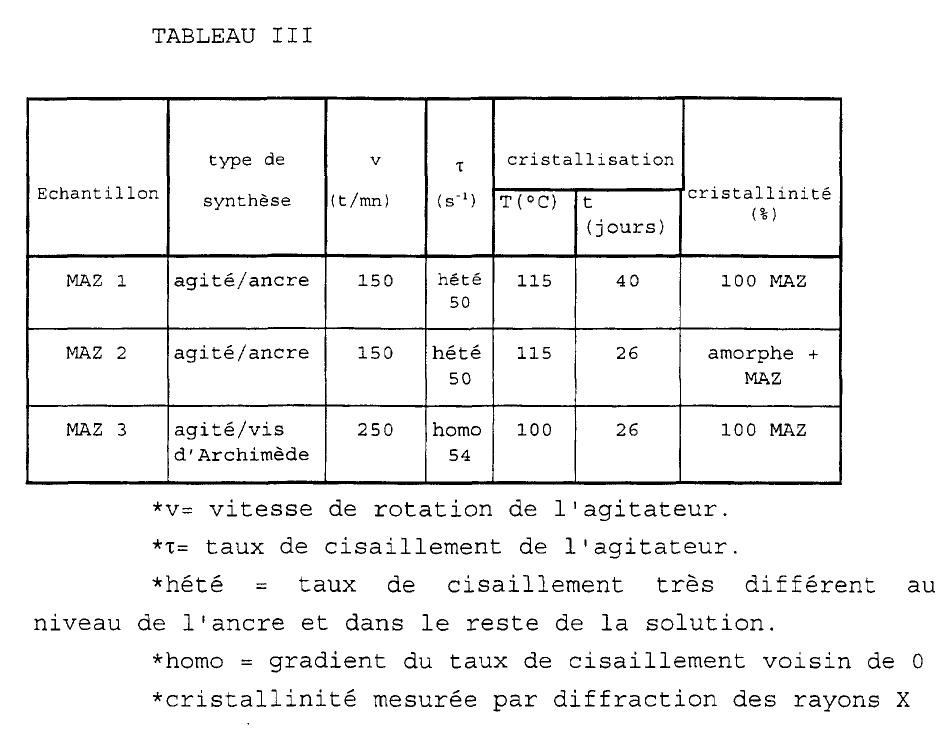

On constate d'après ce tableau que la synthèse de mazzite à 100% de cristallinité en milieu agité type ancre est moins rapide que celle réalisée selon le procédé de l'invention à une température inférieure de 15 °C.

### EXEMPLE IV

Le présent exemple vise à montrer la supériorité du procédé de l'invention et du dispositif correspondant pour la préparation de la gmélinite comparé aux procédés traditionnels de synthèse en statique ou en milieu agité à fort taux de cisaillement.

On prépare plusieurs échantillons d'un même gel de synthèse obtenu en procédant comme suit :

On introduit dans un réacteur de 2 litres en volume, à :
t=0, 1164,4 g d'eau déminéralisée,
t=15 mn, 136 g de POE (polyoxyde d'éthylène de poids moléculaire moyen de 3400g/môle) commercialisé par Adrich.
t=45 mn, 77,5 g de soude
t=75 mn, 170,8 g de NaAlO₂,
t=105 mn, 1406,8 g de silice colloïdale Ludox As 40 commercialisée par DUPONT DE NEMOURS

Le gel ainsi préparé a le stoechiométrie suivante :
10 SiO₂; Al2O₃; 2,1 Na₂O; 0,04 POE; 140 H₂O

Les résultats des synthèses sont données dans le tableau V ci-après.

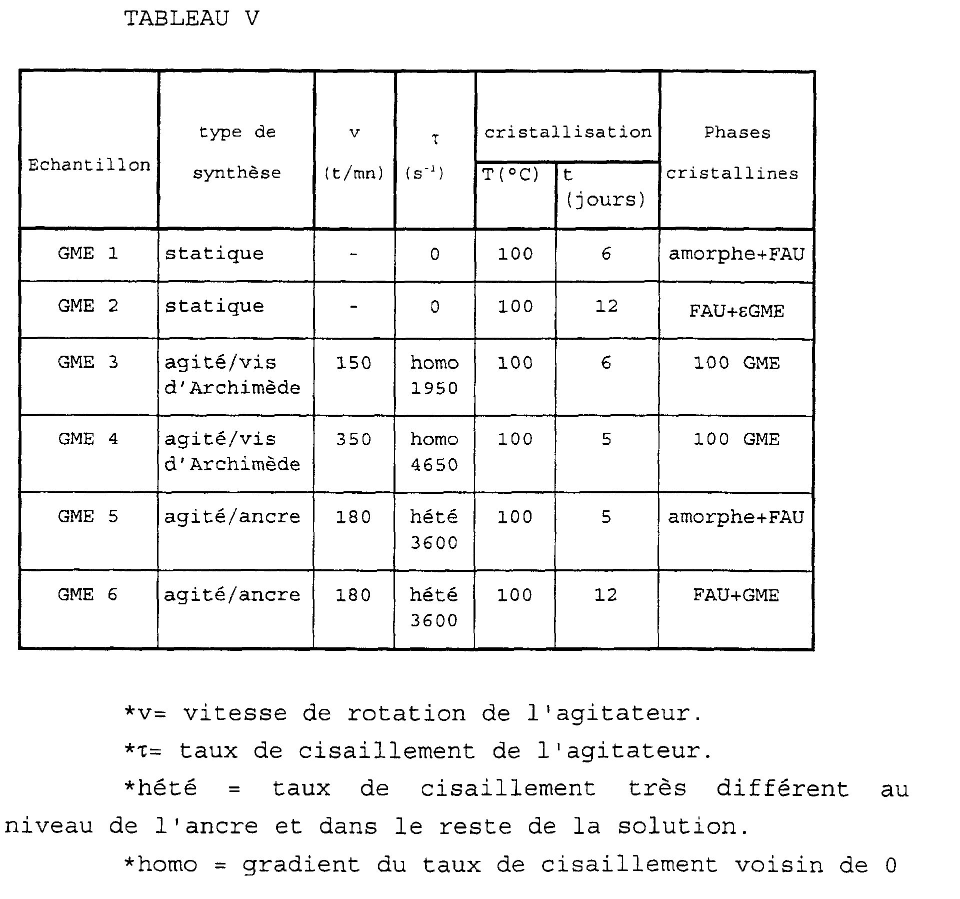

On constate que la synthèse en milieu statique, quelle que soit la durée de cristallisation (jusque 12 jours) ne conduit pas à une phase gmélinite (GME) pure. La synthèse selon l'invention, dans des conditions de cisaillement différentes (150 et 350 tours/mn) conduit de toute façon à une phase gmélinite pure tandis que la synthèse en milieu agité classique type ancre conduit à un mélange de gmélinite et de faujasite (majoritaire).

En outre, on a constaté que la GME pure obtenue présentait une morphologie ovoïde de taille de cristaux supérieur à 1 µm.

## Revendications

1. Procédé de synthèse d'une zéolithe, à partir d'un milieu de synthèse contenant notamment une source d'aluminium trivalent, une source de silicium tétravalent, au moins un cation alcalin ou alcalino-terreux sous forme d'hydroxyde et de l'eau, effectué dans un réacteur contenant un mobile hélicoïdal plein dans un tube de guidage définissant un espace intérieur et un espace extérieur audit tube, **caractérisé en ce qu'**on fait circuler ledit milieu de synthèse dans le réacteur en un écoulement continu parcourant l'espace intérieur puis l'espace extérieur au dit tube et retournant à l'espace intérieur, par la seule rotation du mobile hélicoïdal plein, à une vitesse inférieure à 500t/mn, dans le dit tube maintenu fixe, le milieu de synthèse étant maintenu à une température de mise en oeuvre d'au moins une des opérations de mûrissement ou de croissance cristalline de la zéolithe à synthétiser.

2. Procédé selon la revendication 1 **caractérisé en ce que** la circulation du dit milieu de synthèse est assurée par la mise en rotation continue ou discontinue du mobile hélicoïdal.

3. Procédé selon l'une des revendications 1 ou 2 **caractérisé en ce que** la circulation du milieu correspond à un régime d'écoulement non turbulent.

4. Procédé selon l'une des revendications 1 à 3 **caractérisé en ce que** le tube de guidage est pourvu d'au moins un orifice en sa partie inférieure permettant le libre passage du milieu de synthèse sans perturbation du régime d'écoulement.

5. Procédé selon l'une des revendications 1 à 4 **caractérisé en ce que** l'axe du mobile se confond avec l'axe du tube de guidage qui le contient et l'axe du réacteur.

6. Procédé selon l'une des revendications 1 à 5 **caractérisé en ce que** le mobile hélicoïdal s'inscrit dans un cylindre de révolution tel que le rapport du diamètre de ce cylindre de révolution sur le diamètre du tube de guidage varie de 0,4 à 0,99.

7. Procédé selon l'une des revendications 1 à 6 **caractérisé en ce que** le mobile hélicoïdal s'inscrit dans un cylindre de révolution tel que le rapport du diamètre de ce dit cylindre de révolution sur le diamètre du réacteur varie de 0,3 à 0,9.

8. Procédé selon l'une des revendications 1 à 7 **caractérisé en ce que** le rapport de la hauteur du tube de guidage sur la hauteur du réacteur est maintenu inférieur ou égal à 0,95.

9. Procédé selon l'une des revendications 1 à 8 **caractérisé en ce que** le mobile hélicoïdal est choisi dans le groupe constitué par une vis d'Archimède, un ruban torsadé ou tout autre mobile plein ayant à sa périphérie au moins une arête extérieure présentant une forme hélicoïdale sur l'ensemble de sa longueur.

10. Procédé selon la revendication 9 **caractérisé en ce que** le mobile hélicoïdal est une vis d'Archimède.

11. Procédé selon l'une des revendications 1 à 10 **caractérisé en ce que** le rapport des vitesses des écoulements de directions opposées à l'intérieur et à l'extérieur du tube de guidage varie entre 0,5 et 2 dans le réacteur.

12. Procédé selon l'une des revendications 1 à 11 **caractérisé en ce qu'**il est mis en oeuvre dans une pluralité de réacteurs disposés en série ou en parallèles, raccordés entre eux, le gel recirculant dans chaque réacteur avant d'être dirigé vers le réacteur suivant.

13. Dispositif de mise en oeuvre du procédé défini par les revendications 1 à 12 **caractérisé en ce qu'**il est constitué par au moins un réacteur (1) ouvert ou fermé contenant un tube de guidage cylindrique (5), fixe par rapport au réacteur, d'axe parallèle aux parois du réacteur, comportant au moins un orifice dans sa partie inférieure, ce tube de guidage contenant un mobile hélicoïdal plein (6) s'inscrivant dans un cylindre de révolution de diamètre variant de 0,3 à 0,9 fois le diamètre du réacteur et de 0,4 à 0,99 fois le diamètre du tube de guidage, ce dit mobile étant mis en rotation par un moteur (8), externe au réacteur, le dit réacteur comprenant en outre des conduites d'injection (4) des composés entrant dans la constitution du gel et éventuellement un dispositif de vidange (2).

14. Dispositif selon la revendication 13 **caractérisé en ce que** le tube de guidage contenant le mobile hélicoïdal est placé dans l'axe du réacteur.

15. Dispositif selon l'une des revendications 13 et 14 **caractérisé en ce que** le rapport de la hauteur du tube de guidage sur la hauteur de remplissage du réacteur est maintenu inférieur à 0,95.

16. Dispositif selon l'une des revendications de 13 à 15 **caractérisé en ce que** les mobiles sont choisis dans le groupe constitué par la vis d'Archimède, les rubans hélicoïdaux ou tout autre mobile plein ayant à sa périphérie au moins une arête extérieure présentant une forme hélicoïdale sur l'ensemble de sa longueur.

17. Dispositif selon l'une des revendications de 13 à 16 **caractérisé en ce que** le mobile est une vis d'Archimède qui est mise en rotation au moyen d'un moteur disposé sur son axe, sa vitesse de rotation étant de préférence inférieure à 500 t/mn.

18. Dispositif selon l'une des revendications de 13 à 17 **caractérisé en ce qu'**il est constitué par un seul réacteur de type autoclave pouvant fonctionner sous pression ou à l'atmosphère.

19. Dispositif selon l'une des revendications de 13 à 17 **caractérisé en ce qu'**il est constitué par une pluralité de réacteurs disposés en série contenant chacun un seul tube de guidage équipé d'une vis d'Archimède reliée à un moteur, et comprenant éventuellement à sa base un dispositif d'obturation/vidange du réacteur, les vis d'Archimède étant toutes identiques ou différentes, raccordées ou non au même moteur et tournant à même vitesse ou non.

20. Application du procédé et du dispositif selon l'une des revendications de 1 à 19 à la synthèse en milieu agité à cisaillement constant d'EMO, d'EMT, de Gmélinite et de Mazzite.

## Patentansprüche

1. Verfahren zur Synthese eines Zeoliths aus einem Synthesemedium, das insbesondere eine Quelle für dreiwertiges Aluminium, eine Quelle für vierwertiges Silicium, mindestens ein Alkalimetallkation oder Erdalkalimetallkation in Form des Hydroxids und Wasser enthält, das in einem Reaktor durchgeführt wird, der einen massiven, schraubenförmigen, beweglichen Körper in einem Führungsrohr enthält, wodurch ein Innenraum und ein Außenraum außerhalb des obigen Rohrs definiert werden, **dadurch gekennzeichnet, daß** man das obige Synthesemedium in einem kontinuierlichen Strom in dem Reaktor zirkulieren läßt, wobei das Synthesemedium ausschließlich aufgrund der Rotation des massiven, schraubenförmigen, beweglichen Körpers, die mit einer Geschwindigkeit unter 500 U/min in dem fixiert gehaltenen Rohr erfolgt, durch den Innenraum in dem Rohr und dann den Außenraum außerhalb des Rohres strömt, um dann in den Innenraum zurückzukehren, wobei das Synthesemedium bei einer Temperatur gehalten wird, bei der mindestens die Reifung oder mindestens das Kristallwachstum des zu synthetisierenden Zeoliths erfolgt.

2. Verfahren nach Anspruch 1, **dadurch gekennzeichnet, daß** die Zirkulation des obigen Synthesemediums durch die kontinuierliche oder diskontinuierliche Rotation des schraubenförmigen beweglichen Körpers gewährleistet wird.

3. Verfahren nach einem der Ansprüche 1 und 2, **dadurch gekennzeichnet, daß** die Zirkulation des Mediums in Form einer nicht turbulenten Strömungsbewegung erfolgt.

4. Verfahren nach einem der Ansprüche 1 bis 3, **dadurch gekennzeichnet, daß** das Führungsrohr in seinem unteren Teil mit mindestens einer Öffnung versehen ist, die den freien Durchtritt des Synthesemediums ohne Störung der Strömungsbewegung ermöglicht.

5. Verfahren nach einem der Ansprüche 1 bis 4, **dadurch gekennzeichnet, daß** die Achse des beweglichen Körpers, die Achse des Führungsrohrs, das den beweglichen Körper enthält, und die Achse des Reaktors zusammenfallen.

6. Verfahren nach einem der Ansprüche 1 bis 5, **dadurch gekennzeichnet, daß** der schraubenförmige, bewegliche Körper so in einen Drehzylinder einbeschrieben ist, daß das Verhältnis des Durchmessers dieses Drehzylinders zum Durchmessers des Führungsrohrs im Bereich von 0,4 bis 0,99 liegt.

7. Verfahren nach einem der Ansprüche 1 bis 6, **dadurch gekennzeichnet, daß** der schraubenförmige, bewegliche Körper so in einen Drehzylinder einbeschrieben ist, daß das Verhältnis des Durchmessers dieses Drehzylinders zum Durchmessers des Reaktors im Bereich von 0,3 bis 0,9 liegt.

8. Verfahren nach einem der Ansprüche 1 bis 7, **dadurch gekennzeichnet, daß** das Verhältnis der Höhe des Führungsrohrs zur Höhe des Reaktors kleiner als oder gleich 0,95 gehalten wird.

9. Verfahren nach einem der Ansprüche 1 bis 8, **dadurch gekennzeichnet, daß** der schraubenförmige, bewegliche Körper unter archimedischen Schrauben, verdrillten Bändern und allen sonstigen massiven, beweglichen Körpern, die an ihrem Rand mindestens eine äußere Kante aufweist, die über ihre gesamte Länge die Form einer Schraube aufweisen, ausgewählt wird.

10. Verfahren nach Anspruch 9, **dadurch gekennzeichnet, daß** es sich bei dem schraubenförmigen, beweglichen Körper um eine archimedische Schraube handelt.

11. Verfahren nach einem der Ansprüche 1 bis 10, **dadurch gekennzeichnet, daß** das Verhältnis der Geschwindigkeiten, mit denen die Strömung innerhalb und außerhalb des Führungsrohrs in dem Reaktor in entgegengesetzten Richtungen erfolgt, im Bereich von 0,5 bis 2 liegt.

12. Verfahren nach einem der Ansprüche 1 bis 11, **dadurch gekennzeichnet, daß** es in mehreren miteinander verbundenen Reaktoren durchgeführt wird, die in Reihe oder parallel zueinander angeordnet sind, wobei das Gel in jedem Reaktor zirkuliert, bevor es in den folgenden Reaktor weitergeleitet wird.

13. Vorrichtung zur Durchführung des in den Ansprüchen 1 bis 12 definierten Verfahrens, **dadurch gekennzeichnet, daß** sie besteht aus: mindestens einem offenen oder geschlossenen Reaktor (1), der ein zylindrisches Führungsrohr (5) enthält, das sich in bezug auf den Reaktor in einer fixierten Position befindet, dessen Achse parallel zur Wandung des Reaktors verläuft, das in seinem unteren Teil mindestens eine Öffnung aufweist, wobei das Führungsröhr einen massiven, schraubenförmigen, beweglichen Körper (6) enthält, der in einen Drehzylinder einbeschrieben ist, dessen Durchmesser dem 0,3- bis 0,9-fachen des Durchmessers des Reaktors und dem 0,4- bis 0,99-fachen des Durchmessers des Führungsrohrs entspricht, wobei der obige bewegliche Körper durch einen außerhalb des Reaktors angeordneten Motor (8) in Rotation versetzt wird, wobei der Reaktor außerdem Zufuhrleitungen (4) für die Zuführung der Verbindungen, die die Bestandteile des Gels bilden, und gegebenenfalls eine Vorrichtung (2) zur Entleerung des Reaktors aufweist.

14. Vorrichtung nach Anspruch 13, **dadurch gekennzeichnet, daß** das Führungsrohr, das den schraubenförmigen, beweglichen Körper enthält, in der Achse des Reaktors angeordnet ist.

15. Vorrichtung nach einem der Ansprüche 13 und 14, **dadurch gekennzeichnet, daß** das Verhältnis der Höhe des Führungsrohrs zur Füllhöhe des Reaktors bei einem Wert unter 0,95 gehalten wird.

16. Vorrichtung nach einem der Ansprüche 13 bis 15, **dadurch gekennzeichnet, daß** die beweglichen Körper unter archimedischen Schrauben, verdrillten Bändern und allen sonstigen massiven beweglichen Körpern, die an ihrem Rand mindestens eine äußere Kante aufweist, die über ihre gesamte Länge die Form einer Schraube aufweisen, ausgewählt sind.

17. Vorrichtung nach einem der Ansprüche 13 bis 16, **dadurch gekennzeichnet, daß** es sich bei dem beweglichen Körper um eine archimedische Schraube handelt, die mit Hilfe eines Motors, der in der Schraubenachse angeordnet ist, in Drehung versetzt wird, wobei die Drehgeschwindigkeit vorzugsweise unter 500 U/min liegt.

18. Vorrichtung nach einem der Ansprüche 13 bis 17, **dadurch gekennzeichnet, daß** sie aus einem einzigen Reaktor vom Typ der Autoklaven besteht, der unter Druck oder bei Atmosphärendruck betrieben werden kann.

19. Vorrichtung nach einem der Ansprüche 13 bis 17, **dadurch gekennzeichnet, daß** sie aus mehreren Reaktoren besteht, die in Reihe angeordnet sind, von denen jeder Reaktor ein einziges Führungsrohr enthält, das mit einer archimedischen Schraube, die mit einem Motor verbunden ist, ausgerüstet ist, und jeder Reaktor gegebenenfalls an seinem Boden eine Vorrichtung zum Verschließen oder Entleeren des Reaktors aufweist, wobei die archimedischen Schrauben, die alle gleich oder verschieden sind, mit dem gleichen Motor oder verschiedenen Motoren verbunden sind und sich mit gleicher Geschwindigkeit oder verschiedenen Geschwindigkeiten drehen.

20. Verwendung des Verfahrens und der Vorrichtung nach einem der Ansprüche 1 bis 19 zur Synthese von EMO, EMT, Gmelinit und Mazzit in einem gerührten Medium mit konstanter Scherbeanspruchung.

## Claims

1. A process for synthesising a zeolite from a synthesis medium containing in particular a trivalent aluminium source, a tetravalent silicon source, at least one alkaline or alkaline earth cation in hydroxide form and water, said process being performed in a reactor containing a solid helical moving member in a guide tube defining an internal space and a space external to said tube, **characterised in that** said synthesis medium is circulated in the reactor in a continuous flow passing through the internal space, then the space external to said tube and returning to the internal space, by means solely of the rotation of the solid helical moving member, at a speed lower than 500 rpm, in said tube which is kept fixed, the synthesis medium being kept at a temperature for performing at least one of the ripening or crystalline growth operations of the zeolite to be synthesised.

2. A process according to claim 1, **characterised in that** circulation of said synthesis medium is ensured by the continuous or discontinuous rotation of the helical moving member.

3. A process according to one of claims 1 or 2, **characterised in that** the circulation of the medium corresponds to non-turbulent flow conditions.

4. A process according to one of claims 1 to 3, **characterised in that** the guide tube is provided with at least one opening at its lower part allowing free passage of the synthesis medium without disturbing the flow conditions.

5. A process according to one of claims 1 to 4, **characterised in that** the axis of the moving member coincides with the axis of the guide tube which contains it and the axis of the reactor.

6. A process according to one of claims 1 to 5, **characterised in that** the helical moving member moves within a cylinder of revolution such that the ratio of the diameter of this cylinder of revolution to the diameter of the guide tube varies from 0.4 to 0.99.

7. A process according to one of claims 1 to 6, **characterised in that** the helical moving member moves within a cylinder of revolution such that the ratio of the diameter of said cylinder of revolution to the diameter of the reactor varies from 0.3 to 0.9.

8. A process according to one of claims 1 to 7, **characterised in that** the ratio of the height of the guide tube to the height of the reactor is lower than or equal to 0.95.

9. A process according to one of claims 1 to 8, **characterised in that** the helical moving member is selected from the group comprising an Archimedes' screw, a twisted band or any other solid moving member having at its periphery at least one external edge helical in form over the entire length thereof.

10. A process according to claim 9, **characterised in that** the helical moving member is an Archimedes' screw.

11. A process according to one of claims 1 to 10, **characterised in that** the ratio of the speeds of the opposingly directed flows inside and outside the guide tube varies between 0.5 and 2 in the reactor.

12. A process according to one of claims 1 to 11, **characterised in that** it is performed in a plurality of interconnected reactors disposed in series or in parallel, the gel recirculating in each reactor before being directed to the following reactor.

13. A device for performing the process defined in claims 1 to 12, **characterised in that** it consists of at least one open or closed reactor (1) containing a cylindrical guide tube (5), fixed relative to the reactor and axially parallel with the walls of the reactor, comprising at least one opening in its lower part, this guide tube containing a solid helical moving member (6) moving within a cylinder of revolution of a diameter varying from 0.3 to 0.9 times the diameter of the reactor and from 0.4 to 0.99 times the diameter of the guide tube, said moving member being set in rotation by a motor (8), external to the reactor, said reactor further comprising injection ducts (4) for injecting compounds which make up the gel and optionally an emptying device (2).

14. A device according to claim 13, **characterised in that** the guide tube containing the helical moving member is positioned within the axis of the reactor.

15. A device according to one of claims 13 and 14, **characterised in that** the ratio of the height of the guide tube to the reactor filling level is lower than 0.95.

16. A device according to one of claims 13 to 15, **characterised in that** the moving bodies are selected from the group comprising an Archimedes' screw, twisted bands or any other solid moving member having at its periphery at least one external edge helical in form over the entire length thereof.

17. A device according to one of claims 13 to 16, **characterised in that** the moving member is an Archimedes' screw which is set in rotation by means of a motor disposed on its axis, its speed of rotation preferably being lower than 500 rpm.

18. A device according to one of claims 13 to 17, **characterised in that** it consists of a single reactor of the autoclave type capable of operating under elevated or atmospheric pressure.

19. A device according to one of claims 13 to 17, **characterised in that** it consists of a plurality of reactors disposed in series and each containing a single guide tube equipped with an Archimedes' screw connected to a motor, and optionally comprising at its base a reactor sealing/emptying device, wherein the Archimedes' screws are all identical or different, may or may not be connected to the same motor and may or may not rotate at the same speed.

20. Application of the process and device according to one of claims 1 to 19, for the synthesis using an agitated medium under constant shear of EMO, EMT, gmelinite and mazzite. Translator's comment
Claim 20: "EMO" has been left as it is, although no confirmation has been found for it (EMT, gmelinite and mazzite have been confirmed as correct).
